# EUROPÄISCHE PATENTSCHRIFT

(11) **EP 1 801 404 B1**
(45) Veröffentlichungstag und Bekanntmachung des Hinweises auf die Patenterteilung: **07.12.2016**
(21) Anmeldenummer: 06025764.9
(22) Anmeldetag: 13.12.2006
(51) Int. Cl.: F02K 9/97, F02K 1/82, F02K 9/60

(54) **Raketentriebwerk umfassend einen Hitzeschild**
Rocket engine comprising a heat shield
Moteur fusée comprenant un écran thermique

(30) Priorität: 22.12.2005 DE 102005062030
(43) Veröffentlichungstag der Anmeldung: 27.06.2007
(73) Patentinhaber: Airbus DS GmbH, 82024 Taufkirchen (DE)
(72) Erfinder: Goetz, Andreas, 85591 Vaterstetten (DE); Hartmann, Gerhard, 83123 Amerang (DE); Linner, Herbert, 82110 Germering (DE); Mattstedt, Thomas, 80802 München (DE); Menne, Stefan, Dr., 83059 Kolbermoor (DE)
(74) Vertreter: Schicker, Silvia

(56) Entgegenhaltungen:
- EP-A1- 1 564 495
- JP-A- 4 368 299
- JP-A- 10 203 499
- JP-A- 2002 138 904
- US-A- 5 220 786

## Beschreibung

Die Erfindung betrifft ein Raketentriebwerk gemäß dem Oberbegriff des Patentanspruchs 1.

Zum Schutz von Raketentriebwerken vor der Aufheizung durch intensive Wärmestrahlung der Triebwerksdüsen ist es aus dem Stand der Technik bekannt, Hitzeschilde zwischen der Schubkammer des Triebwerks und der Düsenerweiterung anzuordnen. Ein Hitzeschild gemäß dem Stand der Technik besteht hierbei aus einer tellerförmigen Metallplatte, deren Form im Wesentlichen einen abgeschnittenen flachen Kegel darstellt. Die Metallplatte bildet somit einen konusförmigen Ring, der zwischen der Düsenerweiterung und dem restlichen Triebwerk montiert wird. Die Metallplatte weist die thermische Strahlung der heißen Düse durch Reflexion an ihrer Vorderseite teilweise ab. Ein Nachteil dieser Lösung besteht darin, dass nur ein begrenzter Anteil des Wärmestroms über die Emissivität der Metalloberfläche des Hitzeschildes direkt zurückgestrahlt werden kann. Der übrige Wärmestrom wird über die Rückseite der Metallplatte zum restlichen Triebwerk hin abgegeben und erwärmt dieses in einem Maße, welches die geforderten niedrigen Temperaturen von neu entwickelten Triebwerken überschreitet.

Aus der JP 4 386 299 A und der JP 10 203 499 A sind Raketentriebwerke mit einer Schubkammer zur Treibstoffverbrennung und einer Düsenerweiterung zum Austritt des Treibstoffs bekannt. Die Raketentriebwerke weisen ein Hitzeschild auf, das zwischen der Schubkammer und der Düsenerweiterung angeordnet ist. Der Hitzeschild umfasst jeweils eine Vorder- und Rückseite auf, wobei im montierten Zustand des Hitzeschildes sich dieses von dem Raketentriebwerk nach außen erstreckt und seine Vorderseite der Wärmestrahlung der Düsenerweiterung ausgesetzt ist.

Aufgabe der Erfindung ist es deshalb, ein Raketentriebwerk mit einem Hitzeschild zu schaffen, welches eine noch effektivere Wärmeabschirmung des durch das Raketentriebwerk erzeugten radiativen Wärmestroms gewährleistet.

Diese Aufgabe wird durch die unabhängigen Patentansprüche gelöst. Weiterbildungen der Erfindung sind in den abhängigen Ansprüchen definiert. Das erfindungsgemäße Raketentriebwerk umfasst eine Schubkammer zur Treibstoffverbrennung und eine Düsenerweiterung zum Austritt des Treibstoffs sowie einen Hitzschild. Der Hitzschild ist zwischen der Schubkammer und der Düsenerweiterung angeordnet und umfasst ein erstes Flächenelement mit Vorder- und Rückseite, wobei im montierten Zustand des Hitzeschildes am Raketentriebwerk sich das erste Flächenelement von dem Raketentriebwerk nach außen erstreckt und seine Vorderseite der Wärmestrahlung der Düsenerweiterung ausgesetzt ist. Ferner ist in dem erfindungsgemäßen Hitzeschild ein zweites isolierendes Flächenelement mit Vorder- und Rückseite vorgesehen, welches derart an der Rückseite des ersten Flächenelements angeordnet ist, dass ein Zwischenraum zwischen der Rückseite des ersten Flächenelements und der Vorderseite des zweiten Flächenelements ausgebildet ist, wobei sich der Zwischenraum im montierten Zustand des Hitzeschildes in Richtung von dem Raketentriebwerk nach außen aufweitet. Durch die Verwendung eines zweiten isolierenden Flächenelements und eines sich aufweitenden Zwischenraums wird eine deutlich verbesserte Senkung der rückseitigen Oberflächentemperatur des Hitzeschildes im Vergleich zu bekannten Hitzeschilden erreicht. Insbesondere wird die Wärmestrahlung, welche von dem ersten Flächenelement über dessen Rückseite abgegeben wird, zu einem großen Teil durch Reflexionen in dem sich aufweitenden Zwischenraum in Richtung weg von dem wärmeleitenden Gegenstand nach außen abgestrahlt. Die noch verbleibende Wärmestrahlung wird durch die zusätzliche zweite isolierende Schicht gedämmt, so dass nur noch ein sehr geringer Anteil der vom wärmestrahlenden Gegenstand erzeugten Wärme zur Rückseite des Hitzeschildes gelangt.

In einer bevorzugten Ausführungsform des erfindungsgemäßen Raketentriebwerks besteht das erste Flächenelement zumindest teilweise aus einem metallischen Material. Metallische Materialien weisen eine geringe Emissivität auf, so dass ein Großteil der Wärmestrahlung schon durch die Vorderseite des ersten Flächenelements reflektiert wird, ohne in den Zwischenraum zu gelangen. Hierdurch wird eine besonders gute Wärmeabschirmung erreicht. Zur weiteren Herabsetzung der Emissivität weist die Vorder- und/oder Rückseite des ersten Flächenelements vorzugsweise eine chemisch inerte Beschichtung auf. Diese Beschichtung kann beispielsweise eine Goldbeschichtung, insbesondere eine galvanisch aufgebrachte Goldbeschichtung sein.

Insbesondere bei der Verwendung des Hitzeschildes in einem Raketentriebwerk wird als erstes Flächenelement eine im Wesentlichen ringförmige Scheibe verwendet, welche beispielsweise um den zylindrischen Triebwerkskörper des Raketentriebwerks angeordnet wird und sich von dem Körper im Wesentlichen senkrecht nach außen erstreckt.

In einer bevorzugten Ausgestaltung der Erfindung wird die Isolation des zweiten Flächenelements dadurch bewirkt, dass zwischen der Vorder- und Rückseite des zweiten Flächenelements Isolationsmaterial, insbesondere eine Wärmedämmmatte, angeordnet ist.

Um insbesondere eine niedrige Emissivität der Vorderseite des zweiten Flächenelements zu erreichen, ist diese Vorderseite und ggf. auch die Rückseite des zweiten Flächenelements zumindest teilweise aus metallischem Material hergestellt. Hierdurch wird eine sehr gute Ableitung des radiativen Wärmestroms innerhalb des Zwischenraums nach außen weg von dem wärmestrahlenden Gegenstand erreicht. Analog zum ersten Flächenelement weist die Vorder- und/oder Rückseite des zweiten Flächenelements vorzugsweise eine chemisch inerte Beschichtung auf. Diese Beschichtung kann ebenfalls eine Goldbeschichtung, insbesondere eine galvanisch aufgebrachte Goldbeschichtung sein.

In einer besonders bevorzugten Ausführungsform der Erfindung bildet das zweite Flächenelement im Wesentlichen einen ringförmigen Abschnitt eines Kegels. Eine derartige Form des zweiten Flächenelements begünstigt dessen Herstellung, da abwickelbare Bleche für Vorder- und Rückseite des Flächenelements bei dessen Herstellung verwendet werden können.

In einer besonders bevorzugten Ausgestaltung des erfindungsgemäßen Hitzeschildes ist der Zwischenraum zwischen der Rückseite des ersten Flächenelements und der Vorderseite des zweiten Flächenelements im Querschnitt im Wesentlichen V-förmig ausgestaltet, wobei die Spitze der V-Form benachbart zum wärmestrahlenden Gegenstand liegt bzw. an diesen angrenzt. Hierdurch wird ein Austritt von Wärmestrahlung aus dem Zwischenraum hin zum wärmestrahlenden Gegenstand effektiv verhindert und ein besserer Hitzeschutz gewährleistet.

In einer besonders bevorzugten Ausführungsform des erfindungsgemäßen Hitzeschildes ist der Zwischenraum zwischen der Rückseite des ersten Flächenelements und der Vorderseite des zweiten Flächenelements im montierten Zustand des Hitzeschildes an seinem entfernt von dem Raketentriebwerk liegenden Ende geöffnet. Hierdurch wird ein sehr guter Abtransport der Wärmestrahlung innerhalb des Zwischenraums weg vom wärmestrahlenden Gegenstand erreicht.

In einer weiteren Ausgestaltung des erfindungsgemäßen Hitzeschildes sind zwischen der Rückseite des ersten Flächenelements und der Vorderseite des zweiten Flächenelements ein oder mehrere Halteelemente angeordnet. Diese Halteelemente gewährleisten eine sichere Verbindung zwischen dem teilweise sehr dünnen ersten Flächenelement und dem zweiten Flächenelement.

Vorzugsweise sind die Halteelemente derart an dem ersten und/oder zweiten Flächenelement befestigt, dass eine thermische Ausdehnung des ersten und/oder zweiten Flächenelements ermöglicht wird. Aufgrund der starken Wärmeausdehnungen der Materialien durch Hitzeeinwirkung wird hierdurch verhindert, dass es an der Befestigung der Halteelemente zu Verspannungen aufgrund thermischer Ausdehnung kommt. Vorzugsweise sind die Halteelemente streifenartige Elemente, insbesondere Blechstreifen. Hierdurch wird das Gewicht der Gesamtkonstruktion reduziert.

In einer weiteren Ausgestaltung der Erfindung umfasst das Hitzeschild ein Flanschelement, an dem das erste und zweite Flächenelement befestigt sind und welches zur Montage des Hitzeschildes an dem Raketentriebwerk dient. Vorzugsweise ist dieses Flanschelement im Wesentlichen ringförmig ausgebildet, und das erste und zweite Flächenelement sind über Schraub- und/oder Schweiß- und/oder Nietverbindungen an dem Flanschelement befestigt. Das Flanschelement weist hierbei vorzugsweise eine Mehrzahl von Aussparungen auf, welche Kontaktflächen des Flanschelements voneinander trennen, wobei die Kontaktflächen im montierten Zustand des Hitzeschildes an dem Raketentriebwerk anliegen. Durch das Vorsehen von Aussparungen wird die Kontaktfläche des Flanschelements hin zum wärmestrahlenden Gegenstand verringert, wodurch ein nicht erwünschter Wärmeübertrag hin zum wärmestrahlenden Gegenstand vermieden wird. Ferner können die Aussparungen im Flanschelement zur Durchführung von elektrischen Kabeln verwendet werden.

Um eine besonders einfache und effektive Befestigung des Hitzeschildes zu ermöglichen, besteht das Hitzeschild aus einer Mehrzahl von ringförmigen Kreissegmenten, insbesondere aus 120°-Kreissegmenten, welche zur Bildung eines geschlossenen Rings bei der Montage an dem wärmestrahlenden Gegenstand miteinander verbunden werden.

In einer weiteren Ausgestaltung der Erfindung ist an der Rückseite des zweiten Flächenelements ein weiteres Flächenelement derart angeordnet, dass ein weiterer Zwischenraum, insbesondere in V-Form, zwischen der Rückseite des zweiten Flächenelements und dem weiteren Flächenelement ausgebildet wird. Hierdurch kann nochmals die Temperatur der Rückseite des zweiten Flächenelements durch Abtransport von Wärmestrahlung über den Zwischenraum vermindert werden.

Ausführungsbeispiele der Erfindung werden nachfolgend detailliert anhand der beigefügten Figuren beschrieben.

Es zeigen:
- Fig. 1: Eine Querschnittsansicht einer schematisierten Darstellung des erfindungsgemäßen Hitzeschildes;
- Fig. 2: ein Diagramm, welches die Temperaturverteilung in dem erfindungsgemäßen Hitzeschild wiedergibt;
- Fig. 3: eine perspektivische Ansicht von oben einer ersten Ausführungsform des erfindungsgemäßen Hitzeschildes;
- Fig. 4: eine perspektivische Ansicht von unten der ersten Ausführungsform des erfindungsgemäßen Hitzeschildes;
- Fig. 5: eine perspektivische, teilweise geschnittene Ansicht der ersten Ausführungsform des erfindungsgemäßen Hitzeschildes;
- Fig. 6A, 6B: zwei perspektivische Ansichten eines Raketenantriebes, an dem die erste Ausführungsform des erfindungsgemäßen Hitzeschildes befestigt ist; und
- Fig. 7: eine schematisierte Querschnittsansicht einer zweiten Ausführungsform des erfindungsgemäßen Hitzeschildes.

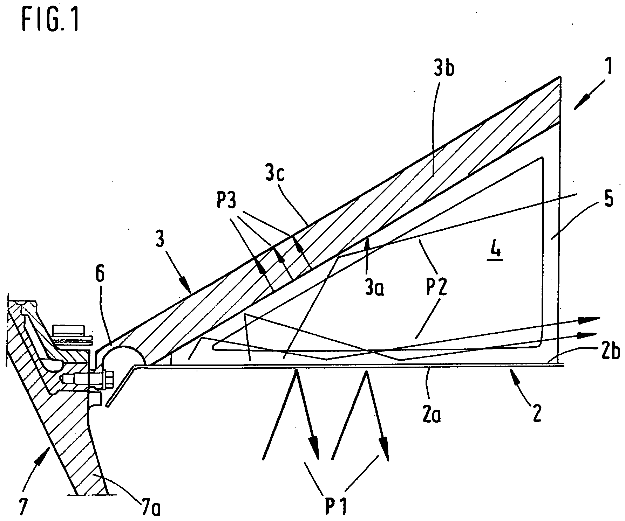

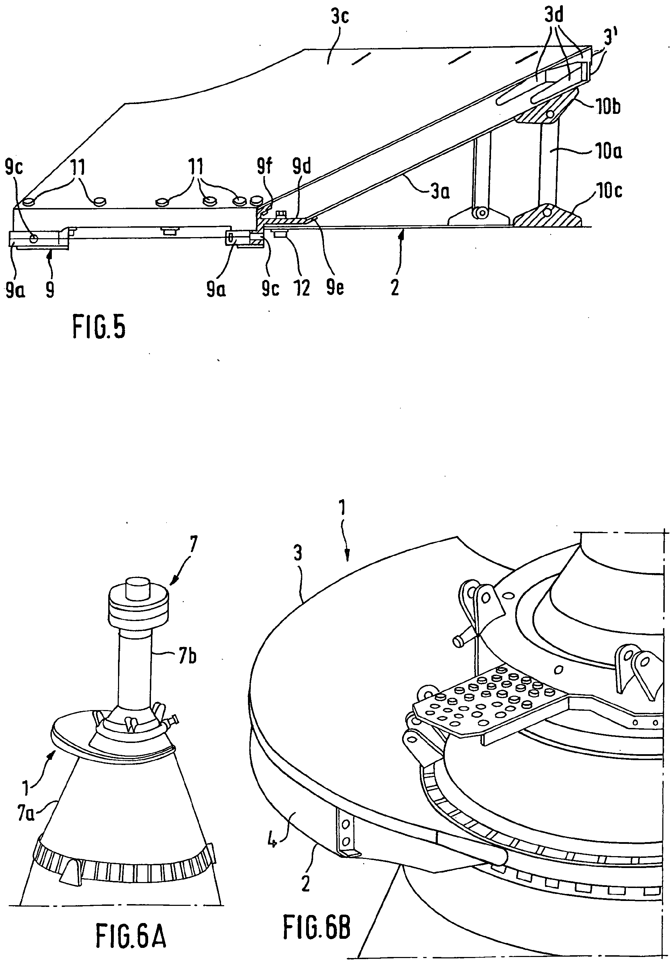

Fig. 1 zeigt eine schematisierte Querschnittsansicht zur Erläuterung des Funktionsprinzips des erfindungsgemäßen Hitzeschildes. Das erfindungsgemäße Hitzeschild 1 umfasst ein erstes Flächenelement 2 in der Form einer Deflektionsscheibe sowie ein zweites Flächenelement 3, welches oberhalb des ersten Flächenelements 2 angeordnet ist und im folgenden als Isolationsbox bezeichnet wird. Diese Isolationsbox liegt an einem Ende auf der Deflektionsscheibe 2 auf und ist gegenüber dieser Scheibe geneigt, so dass zwischen der Deflektionsscheibe und der Isolationsbox ein V-förmiger Zwischenraum 4 ausgebildet ist. Die Deflektionsscheibe 2 und die Isolationsbox 3 werden über einen dreieckförmigen Träger 5 zusammengehalten, und die Gesamtheit aus Deflektionsscheibe und Isolationsbox wird über einen inneren Ring 6, der benachbart zur Spitze des V-förmigen Zwischenraums 4 liegt, mit entsprechenden Befestigungsmitteln an einem wärmestrahlenden Gegenstand 7 befestigt. Die Befestigungsmittel sind in Fig. 1 schematisiert durch eine Schraube angedeutet. In den hier und im folgenden beschriebenen Ausführungsformen stellt der wärmeabstrahlende Gegenstand ein Raketentriebwerk dar, wobei der untere Teil des Gegenstands 7a die Düsenerweiterung des Triebwerks ist, welche sich beim Betrieb des Raketentriebwerks stark erwärmt. Zum Schutz der oberhalb der Düsenerweiterung 7a liegenden Schubkammer 7b (siehe Fig. 6A) ist das Hitzeschild zwischen Schubkammer und Düsenerweiterung angeordnet und erstreckt sich in radialer Richtung nach außen.

Der radiative Wärmestrom, der von der Düsenerweiterung 7a erzeugt wird, wird zum Teil von der Vorderseite 2a der Deflektionsscheibe 2 nach unten reflektiert. Dies ist in Fig. 1 mit den V-förmigen Pfeilen P1 angedeutet. Die Deflektionsscheibe besteht hierbei aus einem Material mit geringer Emissivität, das heißt nur ein geringer Teil der eintreffenden Wärmestrahlung wird von dem Material wieder in Form von Wärmestrahlung emittiert. Als Material für die Deflektionsscheibe kommt insbesondere eine beschichtete Metallplatte in Betracht, wobei die Platte an der Vorderseite 2a sowie auch an ihrer Rückseite 2b mit einer chemisch inerten Beschichtung versehen ist, beispielsweise mit einer galvanisch aufgebrachten Goldschicht.

Die von der Deflektionsscheibe 2 aufgenommene Wärmestrahlung wird zur Rückseite 2b der Deflektionsscheibe transportiert und dann in den V-förmigen Zwischenraum 4 abgegeben. In dem V-förmigen Zwischenraum erfolgt dann eine Reflexion der Wärmestrahlung zwischen der Rückseite 2b der Deflektionsscheibe 2 und der Vorderseite 3a der Isolationsbox 3. Aufgrund der V-förmigen Form des Zwischenraums wird die Wärmestrahlung nach außen hin weg von dem Raketentriebwerk 7 abtransportiert. Um eine effektive Reflexion zu erreichen, besteht die Vorderseite 3a der Isolationsbox auch aus einem Material mit niedriger Emissitivität, insbesondere aus einem Metallblech, welche vorzugsweise ebenfalls mit einer chemisch inerten Beschichtung, beispielsweise mit einer galvanisch aufgebrachten Goldbeschichtung, versehen ist. Die Ableitung des Wärmestroms durch mehrfache Reflexionen an den Wänden 2b und 3a ist in Fig. 1 durch eine Vielzahl von Pfeilen P2 angedeutet.

Der Wärmestrom, der nicht an den Wänden 2b bzw. 3a reflektiert wird, wird über die Isolationsbox 3 aufgenommen. Hierzu weist die Isolationsbox eine Isolationsschicht 3b auf, welche oberhalb der Vorderseite 3a angeordnet ist und vorzugsweise aus einer Wärmedämmmatte besteht. Die Wärmedämmmatte wird an der Rückseite 3c der Isolationsbox durch ein Deckelblech abgedeckt. Der in die Isolationsschicht eintretende Wärmestrom ist durch Pfeile P3 in Fig.1 angedeutet. Aufgrund der niedrigen Wärmeleitung der Isolationsschicht 3b entsteht ein Temperaturgefälle zur Rückseite des Hitzeschildes hin. Dadurch wird erreicht, dass eine niedrige Wandtemperatur an der Rückseite des Hitzeschildes vorliegt und somit ein sehr geringer Teil der Strahlungswärme an die zu schützenden Triebwerkskomponenten der Schubkammer gelangt.

Durch die Verwendung von chemisch inerten Beschichtungen für die Vorder- und Rückseite der Deflektionsscheibe und ggf. auch für die Vorderseite 3a der Isolationsbox wird eine chemische Trägheit dahingehend erzielt, dass eine Oxidation verhindert wird und dadurch einer möglichen Verschlechterung der Emissivität bei hohen Wandtemperaturen entgegengewirkt wird. Statt als Beschichtung die oben erwähnte galvanische Goldschicht zu verwenden, ist es auch möglich, andere Edelmetalle oder chemisch stabile, reflektierende Verbindungen als Beschichtungsmaterial zu verwenden oder eine von Haus aus sehr gut reflektierende Oberfläche einzusetzen.

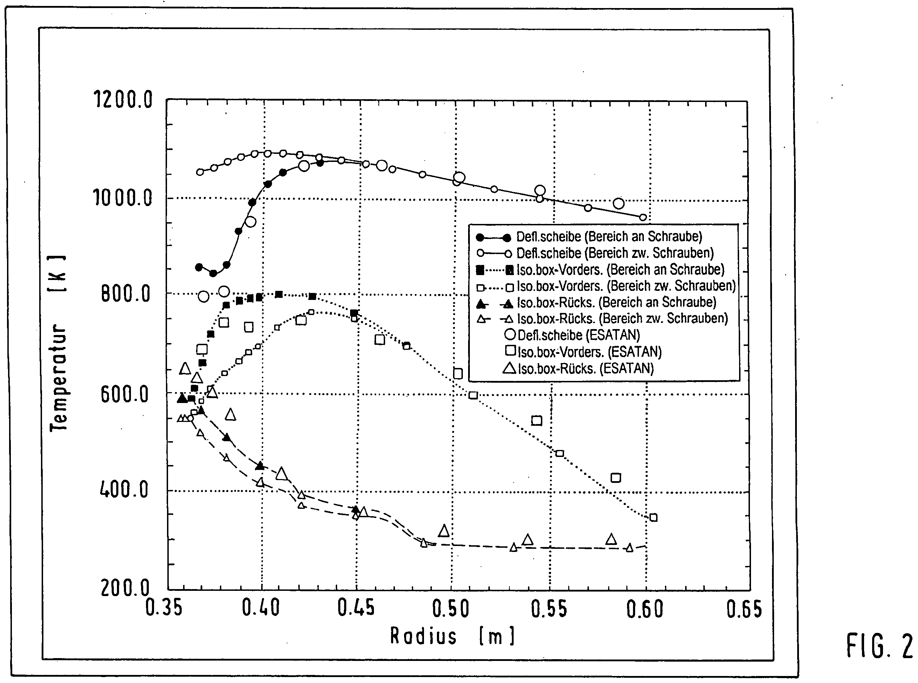

Fig. 2 zeigt ein Diagramm, in dem berechnete Temperaturverteilungen auf den Oberflächen eines erfindungsgemäßen Hitzeschildes für ein Raketentriebwerk entlang eines Radialschnitts wiedergegeben sind. Auf der Abszisse ist der Radius in Metern und auf der Ordinate die berechnete Temperatur aufgetragen. Die Berechnung wurde unter einer Worst-Case-Annahme für die Emissivität der verwendeten Flächenelemente, für das bei der Berechnung verwendete Strahlungsmodell, die Brenndauer und den operationellen Lastpunkt des Triebwerks ausgeführt. Die Graphen mit kreisförmigen Punkten betreffen die Temperaturverteilung der Deflektionsscheibe in einem Bereich an einer Befestigungsschraube, mit der das Hitzeschild am wärmestrahlenden Gegenstand befestigt ist, sowie in einem Bereich zwischen zwei Befestigungsschrauben. Ferner wurde die Temperaturverteilung der Isolationsbox (Graphen mit dreieckigen bzw. quadratischen Punkten) auf Vorder- und Rückseite sowohl in einem Bereich zwischen zwei Befestigungsschrauben als auch in einem Bereich an einer Befestigungsschraube untersucht. Es wurde hierbei die thermische Analyse-Software TMG (die obersten sechs Zeilen in der Legende des Diagramms) und die Analyse-Software ESATAN (die letzten drei Zeilen in der Legende des Diagramms) verwendet. Die Temperatur der Flächenelemente wurde in der Simulation nach 770 Sekunden berechnet. Man erkennt, dass die Deflektionsscheibe Maximaltemperaturen von bis zu 1100 K erreicht. Die Vorderseite der Isolationsbox wird bis zu 800 K warm. Diese Oberflächentemperaturen ergeben einen erheblichen Strahlungsanteil, der aus dem V-förmigen Zwischenraum der Fig. 1 seitwärts nach außen abgestrahlt wird. Der Effekt der Wärmedämmung durch das Isolationsmaterial 3b in der Isolationsbox 3 wird im Temperaturverlauf der Rückseite der Isolationsbox sichtbar (Diagramme mit dreieckigen Punkten in Fig. 2). Man erkennt, dass die Temperatur auf der Rückseite von 600 K bei einem radialen Wert von ca. 0,35 m bis auf 300 K nach außen hin abfällt. Der große Wert bei 0,35 m ist auf die direkte Wärmeleitung durch die flanschartige Befestigung über den inneren Ring 6 der Fig. 1 zurückzuführen.

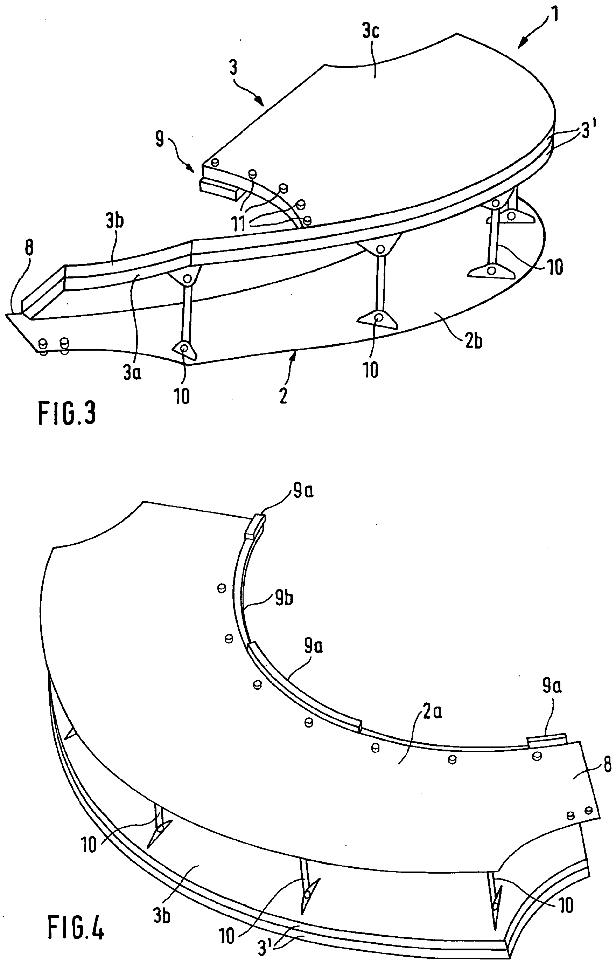

Fig. 3 zeigt eine perspektivische Ansicht von oben auf eine erste Ausführungsform des erfindungsgemäßen Hitzeschildes. In Fig. 3 ist ein 120°-Segment des erfindungsgemäßen Hitzeschildes gezeigt. Das Hitzeschild in dieser Ausführungsform besteht aus insgesamt drei solcher Segmente, welche zu einem Ring zusammengesetzt und über entsprechende Verbindungselemente 8 miteinander verbunden werden. Man erkennt in Fig. 3 die scheibenförmige Ausbildung der Deflektionsscheibe 2 sowie die Ausbildung der Isolationsbox 3 als Abschnitte eines Kegels. An der Innenseite des Hitzeschildes ist ein Flansch 9 vorgesehen, der noch deutlicher aus der weiter unten beschriebenen Fig. 4 ersichtlich ist. Zwischen Rückseite 2b der Deflektionsscheibe 2 und Vorderseite 3a der Isolationsbox 3 befinden sich eine Mehrzahl von Halteelementen 10. Diese Halteelemente bestehen aus Blechstreifen 10a, die an entsprechenden Vorsprüngen 10b auf der Deflektionsscheibe bzw. 10c auf der Vorderseite der Isolationsbox gelagert sind (siehe Fig. 5). Die Halteelemente dienen zur Halterung der Deflektionsscheibe, welche zur einfachen Herstellung und Montierbarkeit als flache Scheibe ausgeführt ist und somit eine geringe Steifigkeit aufweist. Die Halteelemente sind so gelagert, dass keine radial steife Einspannung entsteht und sich somit die Bleche der Deflektionsscheibe und der Vorderseite der Isolationsbox in radialer Richtung thermisch dehnen können. Die Vorderseite 3a sowie die Rückseite 3c der Isolationsbox weisen überlappenden Krempen 3' am vom wärmestrahlenden Gegenstand entfernten Ende auf. Diese Krempen sind nicht miteinander verbunden, um die verschieden starken thermischen Dehnungen der Materialien von Vorder- und Rückseite nicht zu behindern.

Wegen der hohen auftretenden Materialtemperaturen und den spezifischen Anforderungen wurden für die Deflektionsscheibe sowie die Vorder- und Rückseite der Isolationsbox metallische Materialien verwendet. Die hohen Temperaturen verursachen starke thermische Dehnungen des Metalls. Deswegen wurden als Basismaterialien Inconel 600 und Inconel 718 ausgewählt, die bei hohen Temperaturen eine hohe plastische Dehnung aufweisen. Wegen der relativ niedrigen Temperatur kann als Material für die Rückseite 3c der Isolationsbox VA-Stahl verwendet werden.

Fig. 4 zeigt das Hitzeschild der Fig. 3 in einer perspektivischen Ansicht von unten. Man erkennt aus Fig. 4 insbesondere die Ausgestaltung des Flansches 9. Dieser Flansch bildet einen ringförmigen Abschnitt mit Vorsprüngen 9a und dazwischen liegenden Aussparungen 9b. Über die Vorsprünge 9a wird das Hitzeschild an ein Raketentriebwerk angeschraubt. Die Aussparungen 9b dienen zur Durchführung von Messkabeln von der Düse. Da der Flansch nur an einigen vorbestimmten Kontaktstellen 9a mit dem wärmestrahlenden Gegenstand in Berührung kommt, wird der Wärmestrom durch Wärmeleitung in die vor Hitze zu schützenden Schubkammer des Raketentriebwerks minimiert.

Fig. 5 zeigt nochmals eine perspektivische, teilweise geschnittene Ansicht des Hitzeschildes gemäß der Fig. 3 und 4. Man erkennt aus Fig. 5 insbesondere die Querschnittsform des Flansches 9. Es ist ersichtlich, dass der Flansch 9 Bohrungen 9c aufweist, um das Hitzeschild über Schrauben an dem Raketentriebwerk zu befestigen. Ferner umfasst der Flansch einen sich senkrecht nach außen erstreckenden Vorsprung 9d mit einem leicht nach oben gebogenen Ende 9e. Entlang des gebogenen Endes 9e wird die Vorderseite 3a der Isolationsbox angeschweißt und/oder angenietet. Demgegenüber wird die Rückseite 3c der Isolationsbox über die Schrauben 11 an einem weiteren Vorsprung 9f des Flansches festgeschraubt. Analog wird die Deflektionsscheibe 2 über Schrauben 12, welche sich durch Bohrungen in der Deflektionsscheibe und dem Vorsprung 9d erstrecken, an dem Flansch 9 befestigt. Hierbei liegt die Deflektionsscheibe nicht direkt an dem Vorsprung 9d an, sondern sie ist über ein dünnes Band aus gewebter Isoliermatte von dem Flansch getrennt, um einen Wärmeübertrag hin zum Flansch zu vermeiden.

In Fig. 5 wurde das Isolationsmaterial zwischen der Vorder- und Rückseite der Isolationsbox weggelassen. Man erkennt deshalb die Strukturen der Innenflächen der Bleche 3a und 3c, welche Vorder- und Rückseite bilden. Insbesondere wird ersichtlich, dass Spanten 3d im Innenraum am hinteren Ende der Bleche 3a und 3c vorgesehen sind. Diese Spanten dienen zur Führung der Bleche. Darüber hinaus zeigt Fig. 5 einen Querschnitt durch ein Halteelement 10. Es wird ersichtlich, dass der Blechstreifen 10a des Halteelements an seinen Enden über Vorsprüngen 10b bzw. 10c an der Isolationsbox bzw. der Deflektionsscheibe gelagert ist. Die Lagerung kann beispielsweise durch eine Schraubverbindung zwischen Blechstreifen und Vorsprung erreicht werden.

In Fig. 6A und 6B ist das aus dem Stand der Technik bekannte Vinci-Triebwerk gezeigt, an dem das erfindungsgemäße Hitzeschild befestigt ist. Fig. 6B zeigt hierbei eine vergrößerte Ansicht des Ausschnitts V der Fig. 6A. Das Triebwerk besteht aus der oberen Schubkammer 7b, welche vor der Wärmeabstrahlung der sich stark erhitzenden Düsenerweiterung 7a zu schützen ist. Zwecks besserer Darstellbarkeit ist in den Fig. 6A und 6B nur ein einzelnes Segment des Hitzeschildes 1 dargestellt. Dieses Segment wird über den Flansch 9 an einem entsprechenden ringförmigen Wulst zwischen der Schubkammer 7b und der Düsenerweiterung 7a befestigt. Das erfindungsgemäße Hitzeschild gewährleistet somit eine sehr gute Abschottung des radiativen Wärmstroms der Düsenerweiterung von der Schubkammer. Dies wird unter anderem durch die Deflektionsscheibe 2 erreicht, welche direkt benachbart zur Düsenerweiterung liegt. Diese Scheibe weist eine niedrige Emissivität auf und reflektiert somit schon einen beträchtlichen Anteil der Wärmestrahlung. Die restliche Wärmestrahlung wird über den V-förmigen Zwischenraum durch Reflexionen zwischen Deflektionsscheibe und Vorderseite der Isolationsbox 3 nach außen hin abgeleitet. Noch verbleibende Restwärme wird durch das Isolationsmaterial in der Isolationsbox gedämmt und gelangt somit auch nicht zur Schubkammer 7b.

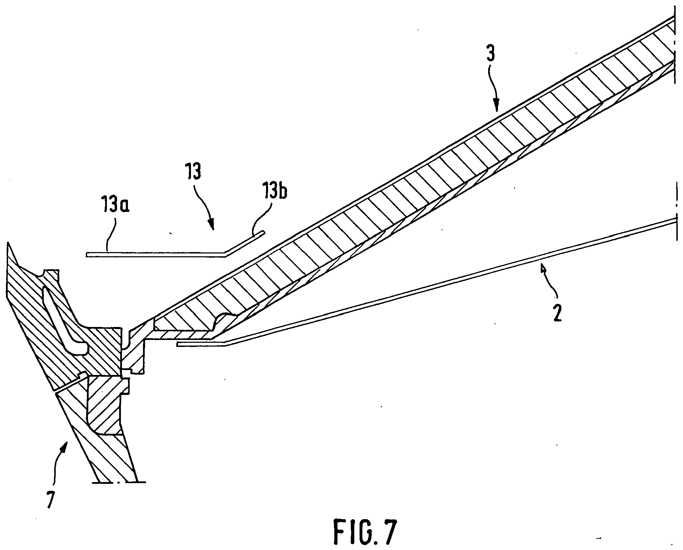

Fig. 7 zeigt die Querschnittsansicht einer alternativen Ausführungsform des erfindungsgemäßen Hitzeschildes. In Fig. 7 ist ein weiteres kleines Blech 13 mit einem sich horizontal erstreckenden Abschnitt 13a und einer Abkantung 13b oberhalb der Isolationsbox 3 angeordnet. Hierdurch wird ein weiterer V-förmiger Zwischenraum zwischen dem Blech und der Rückseite der Isolationsbox gebildet. Auf diese Weise kann die Höchsttemperatur auf der Rückseite des Hitzeschildes weiter gesenkt werden.

Ein weiteres Konzept, das nicht in den Figuren gezeigt ist, ist die Senkung der Oberflächentemperatur der Rückseite der Isolationsbox durch Isolierung mit einer so genannten Multi-Layer-Insulation (MLI). Dieses Konzept funktioniert gut im Vakuum. Bei der Verwendung in Raketentriebwerken kommen insbesondere metallische MLI in Frage.

### Bezugszeichenliste

- 1: Hitzeschild
- 2: erstes Flächenelement
- 2a: Vorderseite des ersten Flächenelements
- 2b: Rückseite des ersten Flächenelements
- 3: zweites Flächenelement
- 3a: Vorderseite des zweiten Flächenelements
- 3b: Isolationsmaterial
- 3c: Rückseite des zweiten Flächenelements
- 3d: Spanten
- 3': Krempen
- 4: Zwischenraum
- 5: Träger
- 6: innerer Ring
- 7: Raketentriebwerk
- 7a: Düsenerweiterung
- 7b: Schubkammer
- 8: Verbindungselement
- 9: Flansch
- 9a: Vorsprung
- 9b: Aussparung
- 9c: Bohrung
- 9d: Vorsprung
- 9e: gebogenes Ende
- 9f: Vorsprung
- 10: Halteelement
- 10a: Blechstreifen
- 10b, 10c: Vorsprünge
- 11: Schrauben
- 12: Schrauben
- 13: Blech
- 13a: vertikaler Abschnitt
- 13b: Abkantung

## Patentansprüche

1. Raketentriebwerk (7), umfassend eine Schubkammer (7b) zur Treibstoffverbrennung und eine Düsenerweiterung (7a) zum Austritt des Treibstoffs, mit einem Hitzeschild (1), das zwischen der Schubkammer (7b) und der Düsenerweiterung (7a) angeordnet ist, wobei das Hitzeschild (1) umfasst: r
ein erstes Flächenelement (2) mit Vorder- und Rückseite (2a, 2b), wobei im montierten Zustand des Hitzeschildes (1) sich das erste Flächenelement (2) von dem Raketentriebwerk (7) nach außen erstreckt und seine Vorderseite (2a) der Wärmestrahlung der Düsenerweiterung (7a) ausgesetzt ist, **dadurch gekennzeichnet, dass**
ein zweites isolierendes Flächenelement (3) mit Vorder- und Rückseite (3a, 3c) derart an der Rückseite (2b) des ersten Flächenelements (2) angeordnet ist, dass ein Zwischenraum (4) zwischen der Rückseite (2b) des ersten Flächenelements (2) und der Vorderseite (3a) des zweiten Flächenelements (3) ausgebildet ist, wobei sich der Zwischenraum (4) im montierten Zustand des Hitzeschildes (1) in Richtung von dem Raketentriebwerk (7) nach außen aufweitet.

2. Raketentriebwerk nach Anspruch 1, **dadurch gekennzeichnet, dass** das erste Flächenelement (2) zumindest teilweise aus metallischem Material besteht.

3. Raketentriebwerk nach Anspruch 1 oder 2, **dadurch gekennzeichnet, dass** die Vorder- und/oder Rückseite (2a, 2b) des ersten Flächenelements (2) eine chemisch inerte Beschichtung aufweisen.

4. Raketentriebwerk nach Anspruch 3, **dadurch gekennzeichnet, dass** die chemisch inerte Beschichtung eine Goldbeschichtung, insbesondere eine galvanisch aufgebrachte Goldbeschichtung, umfasst.

5. Raketentriebwerk nach einem der vorhergehenden Ansprüche, **dadurch gekennzeichnet, dass** das erste Flächenelement (2) eine im Wesentlichen ringförmige Scheibe ist.

6. Raketentriebwerk nach einem der vorhergehenden Ansprüche, **dadurch gekennzeichnet, dass** zwischen der Vorder- und Rückseite (3a, 3c) des zweiten Flächenelements (3) Isolationsmaterial, insbesondere eine Wärmedämmmatte, angeordnet ist.

7. Raketentriebwerk nach einem der vorhergehenden Ansprüche, **dadurch gekennzeichnet, dass** die Vorder- und/oder Rückseite (3a, 3c) des zweiten Flächenelements (3) zumindest teilweise aus metallischem Material bestehen.

8. Raketentriebwerk nach einem der vorhergehenden Ansprüche, **dadurch gekennzeichnet, dass** die Vorder- und/oder Rückseite (3a, 3c) des zweiten Flächenelements (3) eine chemisch inerte Beschichtung aufweisen.

9. Raketentriebwerk nach Anspruch 8, **dadurch gekennzeichnet, dass** die chemisch inerte Beschichtung eine Goldbeschichtung, insbesondere eine galvanisch aufgebrachte Goldbeschichtung, umfasst.

10. Raketentriebwerk nach einem der vorhergehenden Ansprüche, **dadurch gekennzeichnet, dass** das zweite Flächenelement (3) im Wesentlichen einen ringförmigen Abschnitt eines Kegels bildet.

11. Raketentriebwerk nach einem der vorhergehenden Ansprüche, **dadurch gekennzeichnet, dass** der Zwischenraum (4) zwischen der Rückseite (2b) des ersten Flächenelements (2) und der Vorderseite (3a) des zweiten Flächenelements (3) im Querschnitt im Wesentlichen eine V-Form aufweist, wobei die Spitze der V-Form an den wärmestrahlenden Gegenstand (7) angrenzt.

12. Raketentriebwerk nach einem der vorhergehenden Ansprüche, **dadurch gekennzeichnet, dass** im montierten Zustand des Hitzeschildes (1) der Zwischenraum (4) zwischen der Rückseite (2b) des ersten Flächenelements (2) und der Vorderseite (3a) des zweiten Flächenelements (3) an seinem entfernt von dem Raketentriebwerk (7) liegenden Ende geöffnet ist.

13. Raketentriebwerk nach einem der vorhergehenden Ansprüche, **dadurch gekennzeichnet, dass** zwischen der Rückseite (2b) des ersten Flächenelements (2) und der Vorderseite (3a) des zweiten Flächenelements (3) ein oder mehrere Halteelemente (10) angeordnet sind.

14. Raketentriebwerk nach Anspruch 13, **dadurch gekennzeichnet, dass** die Halteelemente (10) derart an dem ersten und/oder zweiten Flächenelement (2, 3) befestigt sind, dass eine thermische Ausdehnung des ersten und/oder zweiten Flächenelements (2, 3) ermöglicht wird.

15. Raketentriebwerk nach Anspruch 13 oder 14, **dadurch gekennzeichnet, dass** die Halteelemente (10) streifenartige Elemente, insbesondere Blechstreifen, umfassen.

16. Raketentriebwerk nach einem der vorhergehenden Ansprüche, **dadurch gekennzeichnet, dass** das Hitzeschild (1) ein Flanschelement (9) umfasst, an dem das erste und zweite Flächenelement (2, 3) befestigt sind und welches zur Montage des Hitzeschildes (1) an dem Raketentriebwerk (7) dient.

17. Raketentriebwerk nach Anspruch 16, **dadurch gekennzeichnet, dass** das Flanschelement im Wesentlichen ringförmig ausgebildet ist.

18. Raketentriebwerk nach Anspruch 16 oder 17, **dadurch gekennzeichnet, dass** das erste und zweite Flächenelement (2, 3) über Schraub- und/oder Schweiß- und/oder Nietverbindungen an dem Flanschelement (9) befestigt sind.

19. Raketentriebwerk nach einem der Ansprüche 16 bis 18, **dadurch gekennzeichnet, dass** das Flanschelement (9) eine Mehrzahl von Aussparungen (9b) aufweist, welche Kontaktflächen (9a) des Flanschelements (9) voneinander trennen, wobei die Kontaktflächen (9a) im montierten Zustand des Hitzeschildes (1) an dem Raketentriebwerk (7) anliegen.

20. Raketentriebwerk nach einem der vorhergehenden Ansprüche, **dadurch gekennzeichnet, dass** das Hitzeschild (1) eine Mehrzahl von ringförmigen Kreissegmenten, insbesondere drei 120°-Kreissegmente umfasst, welche zur Bildung eines geschlossenen Rings miteinander verbunden sind.

21. Raketentriebwerk nach einem der vorhergehenden Ansprüche, **dadurch gekennzeichnet, dass** an der Rückseite (3c) des zweiten Flächenelements (3) ein weiteres Flächenelement (13) derart angeordnet ist, dass ein weiterer Zwischenraum, insbesondere in V-Form, zwischen der Rückseite (3c) des zweiten Flächenelements (3) und dem weiteren Flächenelement (13) ausgebildet ist.

## Claims

1. A rocket engine (7), comprising a thrust chamber (7b) for the fuel combustion and a nozzle expansion (7a) for the exiting of the fuel, with a heat shield (1) which is arranged between the thrust chamber (7b) and the nozzle expansion (7a), wherein the heat shield (1) comprises:
a first planar element (2) having a front and a back side (2a, 2b); wherein, in a mounted state of the heat shield (1), the first planar element (2) extends outwards from the rocket engine (7), with its front side (2a) being exposed to the heat radiation of at least a section of the nozzle expansion (7a);
**characterized in that**
a second insulating planar element (3) having a front and a back side (3a, 3c) is arranged on the back side (2b) of the first planar element (2) in such a manner that a space (4) is formed between the back side (2b) of the first planar element (2) and the front side (3a) of the second planar element (3), wherein, in the mounted state of the heat shield (1), the gap (4) widens in an outward direction from the rocket engine (7).

2. The rocket engine according to claim 1, **characterized in that** the first planar element (2) at least partially consists of a metallic material.

3. The rocket engine according to claim 1 or 2, **characterized in that** at least one of the front and the back side (2a, 2b) of the first planar element (2) has a chemically inert coating.

4. The rocket engine according to claim 3, **characterized in that** the thermally inert coating comprises a gold coating, in particular a galvanically applied gold coating.

5. The rocket engine according to any one of the preceding claims, **characterized in that** the first planar element (2) is a substantially ring-shaped disk.

6. The rocket engine according to any one of the preceding claims, **characterized in that** insulation material, in particular an insulation mat, is arranged between the front and the back side (3a, 3c) of the second planar element (3).

7. The rocket engine according to any one of the preceding claims, **characterized in that** at least one of the front and the back side (3a, 3c) of the second planar element (3) at least partially consists of a metallic material.

8. The rocket engine according to any one of the preceding claims, **characterized in that** at least one of the front and the back side (3a, 3c) of the second planar element (3) has a chemically inert coating.

9. The rocket engine according to claim 8, **characterized in that** the chemically inert coating comprises a gold coating, in particular a galvanically applied gold coating.

10. The rocket engine according to any one of the preceding claims, **characterized in that** the second planar element (3) forms a substantially ring-shaped part of a cone.

11. The rocket engine according to any one of the preceding claims, **characterized in that** the space (4) between the back side (2b) of the first planar element (2) and the front side (3a) of the second planar element (3) has a substantially V-shaped cross-section, the point of the V-shape adjoining the heat-radiating object (7).

12. The rocket engine according to any one of the preceding claims, **characterized in that**, in the mounted state of the heat shield (1), the space (4) between the back side (2b) of the first planar element (2) and the front side (3a) of the second planar element (3) is opened at its end situated away from the rocket engine (7).

13. The rocket engine according to any one of the preceding claims, **characterized in that** one or more holding element(s) (10) is/are arranged between the back side (2b) of the first planar element (2) and the front side (3a) of the second planar element (3).

14. The rocket engine according to claim 13, **characterized in that** the holding elements (10) are fastened to at least one of the first and the second planar element (2, 3) such that thermal expansion of the at least one of the first and the second planar element (2, 3) is permitted.

15. The rocket engine according to claim 13 or 14, **characterized in that** the holding elements (10) comprise strip-type elements, in particular sheet strips.

16. The rocket engine according to any one of the preceding claims, **characterized in that** the heat shield (1) comprises a flange element (9) to which the first and the second planar element (2, 3) are fastened, and which is used for mounting the heat shield (1) on the rocket engine (7).

17. The rocket engine according to claim 16, **characterized in that** the flange element has an essentially ring-shaped construction.

18. The rocket engine according to claim 16 or 17, **characterized in that** the first and the second planar element (2, 3) are fastened to the flange element (9) by way of screwed and/or welded and/or riveted connections.

19. The rocket engine according to any one of claims 16 to 18, **characterized in that** the flange element (9) has a plurality of recesses (9b) which separate contact surfaces (9a) of the flange element (9) from one another, wherein, in the mounted state of the heat shield (1), the contact surfaces (9a) rest against the rocket engine (7).

20. The rocket engine according to any one of the preceding claims, **characterized in that** the heat shield (1) comprises a plurality of ring-shaped partial circle segments, in particular three 120° partial circle segments, which are mutually connected to form a closed ring.

21. The rocket engine according to any one of the preceding claims, **characterized in that** a further planar element (13) is arranged on the back side (3c) of the second planar element (3) in such a manner that a further space, which in particular has a V-shape, is formed between the back side (3c) of the second planar element (3) and the further planar element (13).

## Revendications

1. Moteur-fusée (7), comprenant une chambre de poussée (7b) pour la combustion du carburant et une extension de tuyère (7a) pour la sortie du carburant, avec un écran thermique (1) disposé entre la chambre de poussée (7b) et l'extension de tuyère (7a), cet écran thermique comportant :
- un premier élément de surface (2) pourvu d'une face avant et d'une face arrière (2a, 2b), ce premier élément de surface (2) s'étendant vers l'extérieur depuis le moteur-fusée (7), à l'état monté de l'écran thermique (1), et sa face avant (2a) étant exposée à la radiation thermique de l'extension de tuyère (7a), **caractérisé en ce que**
un deuxième élément de surface (3) isolant pourvu d'une face avant et d'une face arrière (3a, 3b) est disposé sur la face arrière (2b) du premier élément de surface (2) de manière à former un espace intermédiaire (4) entre la face arrière (2b) du premier élément de surface (2) et la face avant (3a) du deuxième élément de surface (3), cet espace intermédiaire (4) s'élargissant vers l'extérieur en direction du moteur-fusée (7), à l'état monté de l'écran thermique (1).

2. Moteur-fusée selon la revendication 1, **caractérisé en ce que** le premier élément de surface (2) est constitué au moins partiellement d'un matériau métallique.

3. Moteur-fusée selon la revendication 1 ou 2, **caractérisé en ce que** la face avant et/ou la face arrière (2a, 2b) du premier élément de surface (2) présentent un revêtement chimiquement inerte.

4. Moteur-fusée selon la revendication 3, **caractérisé en ce que** le revêtement chimiquement inerte comprend un placage en or, plus particulièrement un placage en or déposé par galvanisation.

5. Moteur-fusée selon l'une des revendications précédentes, **caractérisé en ce que** le premier élément de surface (2) consiste en un disque sensiblement annulaire.

6. Moteur-fusée selon l'une des revendications précédentes, **caractérisé en ce qu'**un matériau isolant, plus particulièrement un tapis d'isolation thermique est disposé entre la face avant et/ou la face arrière (3a, 3c) du deuxième élément de surface (2).

7. Moteur-fusée selon l'une des revendications précédentes, **caractérisé en ce que** la face avant et/ou la face arrière (3a, 3c) du deuxième élément de surface (3) sont constituées au moins partiellement d'un matériau métallique.

8. Moteur-fusée selon l'une des revendications précédentes, **caractérisé en ce que** la face avant et/ou la face arrière (3a, 3c) du deuxième élément de surface (3) présentent un revêtement chimiquement inerte.

9. Moteur-fusée selon la revendication 8, **caractérisé en ce que** le revêtement chimiquement inerte comprend un placage en or, plus particulièrement un placage en or déposé par galvanisation.

10. Moteur-fusée selon l'une des revendications précédentes, **caractérisé en ce que** le deuxième élément de surface (3) forme sensiblement un segment annulaire d'un cône.

11. Moteur-fusée selon l'une des revendications précédentes, **caractérisé en ce que** l'espace intermédiaire (4) entre la face arrière (2b) du premier élément de surface (2) et la face avant (3a) du deuxième élément de surface (3) présente une section transversale sensiblement en forme de V, la pointe de la forme en V étant située adjacente à l'objet (7) rayonnant la chaleur.

12. Moteur-fusée selon l'une des revendications précédentes, **caractérisé en ce qu'**à l'état monté de l'écran thermique (1), l'espace intermédiaire (4) entre la face arrière (2b) du premier élément de surface (2) et la face avant (3a) du deuxième élément de surface (3) est ouvert à son extrémité éloignée du moteur-fusée (7).

13. Moteur-fusée selon l'une des revendications précédentes, **caractérisé en ce qu'**un ou plusieurs éléments de retenue (10) sont disposés entre la face arrière (2b) du premier élément de surface (2) et la face avant (3a) du deuxième élément de surface (3).

14. Moteur-fusée selon la revendication 13, **caractérisé en ce que** les éléments de retenue (10) sont fixés sur le premier et/ou sur le deuxième élément de surface (2, 3) de manière à permettre une dilatation thermique du premier et/ou du deuxième élément de surface (2, 3).

15. Moteur-fusée selon la revendication 13 ou 14, **caractérisé en ce que** les éléments de retenue (10) comprennent des éléments en forme de bandes, plus particulièrement de bandes en tôles.

16. Moteur-fusée selon l'une des revendications précédentes, **caractérisé en ce que** l'écran thermique (1) comprend un élément formant bride (9) sur lequel le premier et le deuxième élément de surface (2, 3) sont fixés et lequel sert au montage de l'écran thermique (1) sur le moteur-fusée (7).

17. Moteur-fusée selon la revendication 16, **caractérisé en ce que** l'élément formant bride est de configuration sensiblement annulaire.

18. Moteur-fusée selon la revendication 16 ou 17, **caractérisé en ce que** le premier et le deuxième élément de surface (2, 3) sont fixés sur l'élément formant bride (9) par le biais de liaisons vissées et/ou soudées et/ou rivetées.

19. Moteur-fusée selon l'une des revendications 16 à 18, **caractérisé en ce que** l'élément formant bride (9) présente une pluralité d'évidements (9b) lesquels séparent des surfaces de contact (9a) de l'élément formant bride (9) les unes des autres, lesdites surfaces de contact (9a) étant en contact avec le moteur-fusée (7), à l'état monté de l'écran thermique (1).

20. Moteur-fusée selon l'une des revendications précédentes, **caractérisé en ce que** l'écran thermique (1) comprend une pluralité de segments circulaires annulaires, plus particulièrement trois segments circulaires de 120° qui sont reliés les uns aux autres pour former un anneau fermé.

21. Moteur-fusée selon l'une des revendications précédentes, **caractérisé en ce qu'**un élément de surface (13) supplémentaire est disposé sur la face arrière (3c) du deuxième élément de surface (3) de manière à former un espace intermédiaire supplémentaire, plus particulièrement en forme de V, entre la face arrière (3c) du deuxième élément de surface (3) et l'élément de surface (13) supplémentaire.
